# EUROPÄISCHE PATENTSCHRIFT

(11) **EP 0 764 066 B1**
(45) Veröffentlichungstag und Bekanntmachung des Hinweises auf die Patenterteilung: **24.11.1999**
(21) Anmeldenummer: 95915812.2
(22) Anmeldetag: 21.04.1995
(51) Int. Cl.: B23B 27/14

(54) **SCHNEIDEINSATZ**
CUTTING INSERT
PLAQUETTE DE COUPE

(30) Priorität: 17.06.1994 DE 4422312
(43) Veröffentlichungstag der Anmeldung: 26.03.1997
(73) Patentinhaber: Widia GmbH, 45145 Essen (DE)
(72) Erfinder: AGUSTIN PAYA, José, 45479 Mülheim (DE)
(74) Vertreter: Vomberg, Friedhelm, Dipl.-Phys.
(86) Internationale Anmeldenummer: DE9500552
(87) Internationale Veröffentlichungsnummer: WO9535178

(56) Entgegenhaltungen:
- WO-A-92/21467
- GB-A- 2 254 026

## Beschreibung

Die Erfindung betrifft einen Schneideinsatz zur spanbildenden Bearbeitung, dessen mindestens einseitige Deckfläche die Spanfläche und dessen umlaufende Seitenflächen die Freiflächen bilden, wobei die Spanfläche mindestens ein erhabenes Spanformelement aufweist, das in Richtung der Schneidkante aus einer Draufsicht betrachtet keilförmig ausläuft und das in Richtung seiner Längsachse im Bereich der der Schneidkante zugewandten Anstiegsfläche kontinuierlich zu schneidkantenferneren Bereichen eine zunehmende Breite aufweist, wobei die Anstiegsfläche aus im wesentlichen ebenen Seitenflächen besteht, die sowohl zur Schneidkante hin als auch nach oben unter einem spitzen Winkel aufeinander zulaufen, und wobei die der Schneidkante abgewandte Fläche an die Anstiegsfläche zumindest teilweise angrenzt und als abfallende Flanke ausgebildet ist.

Schneideinsätze dieser Art sind aus der GB 2 254 026 A bekannt. Der betreffende Schneideinsatz besitzt zwei seitliche Anstiegsflächen, die sowohl zur Schneidkante hin als auch nach oben unter einem spitzen Winkel aufeinander zulaufen. Das Spanformelement besitzt ferner eine konvex ausgebildete abfallende Flanke, die ebenfalls unter Bildung einer spitzwinkligen Kante an die genannten Seitenflächen angrenzt. Die ebene Dachfläche dieses Spanformelementes besitzt gemeinsame Grenzlinien mit den Seitenflächen, die spitzwinklig V-förmig zur Schneidkante hin verlaufen und im rückwärtigen Teil zur abfallenden Flanke hin teilkreisförmig ausgebildet sind.

Die WO 92/21467 beschreibt einen Schneideinsatz, der an seinen Spanflächen mit einer Vielzahl von Längsrippen versehen ist, deren Längsachsen im wesentlichen senkrecht zur Schneidkante oder unter einem spitzen Winkel zur Schneidenkantennormalen verlaufen, und von denen mindestens eine aus den jeweils übernächsten Längsrippen bestehende Gruppe von Längsrippen parallel zueinander angeordnet ist. In einer speziellen Ausführungsform weisen die Längsrippen mindestens einen bis auf die Spanfläche reichenden Einschnitt auf. Die Längsrippen sind in einer Querschnittsansicht betrachtet durchgehend konvex ausgeführt.

Darüber hinaus sind aus der EP 0 066 091 A1 Schneideinsätze mit keilförmig ausgebildeten Spanformelementen bekannt. Die dort beschriebenen Schneideinsätze besitzen im Anschluß an eine Schneidkante bzw. die Schneidecke eine Fase konstanter Breite, an die sich ein stark abfallender Spanflächenbereich und ein schwach abfallender Spanflächenbereich anschließt. Die Spanformelemente liegen im letztgenannten zweiten schwach abfallenden Spanflächenbereich. Das Spanformelement überragt mit seiner obersten Kante die durch die Schneidkanten bzw. die Schneidecken bestimmte Ebene. Die Anstiegsfläche besteht aus gewölbten Seitenflächen, die zur Schneidecke hin in einer Rundung mit einem großen, aber nicht näher bestimmten Radiuswinkel auslaufen.

Es ist Aufgabe der vorliegenden Erfindung, den eingangs genannten Schneideinsatz dahingehend zu verbessern, daß bei Zerspanungsoperationen, bei denen stark geformte Spanquerschnitte entstehen, der Span bzw. die Spanlamellen durch einen gezielten Krafteinfluß durch ein Element an bestimmten Stellen auseinander gelöst wird bzw. werden, so daß der stabile Spanquerschnitt geschwächt wird und die vom Span ausgehende Krafteinwirkung in den Schneideinsatz reduziert wird.

Diese Aufgabe wird durch den Schneideinsatz nach Anspruch 1 gelöst.

Das mindestens eine auf der Spanfläche angeordnete erhabene Spanformelement weist in Richtung seiner Längsachse im Bereich der der Schneidkante zugewandten Anstiegsfläche kontinuierlich zu schneidkantenferneren Bereichen eine zunehmende Breite auf, wobei die Anstiegsfläche aus im wesentlichen ebenen Seitenflächen besteht, die sowohl zur Schneidkante hin als auch nach oben unter einem spitzen Winkel aufeinander zulaufen, wobei die obere Kante durchgängig abgerundet ist, und wobei die der Schneidekante abgewandte Fläche an die Anstiegsfläche zumindest teilweise angrenzt und als abfallende Flanke ausgebildet ist, die eine Ebene bildet, die einen negativen Neigungswinkel relativ zu der Ebene aufweist, in der die Schneidecken liegen bzw. der durch die Schneidkante gebildet wird. Dieser Neigungswinkel liegt zwischen 15° und 40°.

Vorteilhafterweise bewirkt dieses erhabene Spanformelement nicht nur ein lokales Anheben des ablaufenden Spans gegenüber der das Element umgebenden Spanfläche, sondern auch ein partielles Aufreißen der ablaufenden Spanlamellen, welches ein späteres Abbrechen einzelner Lamellenteile begünstigt, quer und längs zur Spanablaufrichtung. Die entstehenden Reibungskräfte sind gegenüber bekannten Spanformelementen bedeutend minimiert und die Kraftauswirkung des Spanes in den Schneideinsatz reduziert. Vorteilhafterweise können diese erhabenen Spanformelemente mit anderen, auch muldenförmigen Vertiefungen, beliebigen Schneidkantenformen auf Schneideinsätzen mit unterschiedlichen Geometrien angeordnet werden.

Weiterbildungen der Erfindung sind in den Ansprüchen 2 bis 15 beschrieben. So liegt der an der oberen Kante in Längsrichtung gemessene Anstiegswinkel relativ zu der Ebene, in der die Schneidecken liegen oder relativ zur Schneidkante zwischen 10° und 45°, vorzugsweise zwischen 20° und 35°. Die abfallende Flanke ist vorzugsweise als Ebene ausgebildet und weist einen zu der genannten Ebene hin negativen Neigungswinkel zwischen 15° bis 30° auf. Erfahrungen haben gezeigt, daß optimale Ergebnisse erzielt werden konnten, wenn die Seitenflächen in einer Draufsicht betrachtet einen Keilwinkel zwischen 15° und 40°, vorzugsweise zwischen 20° und 30° bilden und/oder der Radius der abgerundeten oberen Kante zwischen 0,1 mm bis 0,5 mm liegt. Die Länge der Anstiegsflanke, in Draufsicht gemessen an der oberen Kante, liegt vorzugsweise zwischen 0,3 mm und 4 mm. In Verbindung mit dem genannten Winkel der Anstiegsflanke reicht diese Länge aus, um den genannten Lamellenaufriß bei üblichen Schnittbedingungen zu bewirken. Der Abstand des oder der Spanformelemente zur Schneidkante hin liegt zwischen 0,05 mm bis 1 mm, vorzugsweise 0,08 mm bis 0,3 mm. Die Spanformelemente sind derart angeordnet, daß sie mit ihrer Längsachse im wesentlichen senkrecht zur nächstliegenden Schneidkante weisen und im kritischen Bereich des Spanquerschnittes positioniert sind. Das Spanformelement kann eine obere Ebene und parallel zur Schneidkantenebene liegende Dachfläche aufweisen, die vorzugsweise durch Abschleifen erzeugt worden ist. Diese Dachfläche kann auch als Auflagefläche, insbesondere bei Wendeschneidplatten, die beidseitig verwendbar sind, dienen.

Nach einer weiteren Ausgestaltung der Erfindung ist der an die Schneidkante angrenzende Spanflächenbereich als abfallende Flanke, vorzugsweise unter demselben negativen Winkel wie die abfallende Flanke des Spanformelements, ausgebildet. Zwischen dem abfallenden Spanflächenbereich und der Schneidkante kann eine Fase vorgesehen sein, vorzugsweise gleichbleibender Breite entlang der gesamten Schneidkante. Die Fase kann unter einem positiven Winkel oder einem Winkel von 0° verlaufen. Gleichermaßen kann das Spanflächenmittelteil als ebenes abgesenktes oder erhabenes Plateau ausgebildet sein, wobei zwischen einem erhabenen Spanformplateau und der Schneidkante eine Spanformnut angeordnet ist, in der die erhabenen Spanformelemente liegen.

Wie bereits eingangs erwähnt, können die erhabenen Spanformelemente nach der vorliegenden Erfindung mit weiteren muldenförmigen Spanformelementen kombiniert sein, insbesondere mit Eindrückungen, die einen unter einem negativen Spanwinkel und einem 0°-Spanwinkel zur Schneidkante hin auslaufenden Spanflächengrund aufweisen, wobei die Spanfläche im Bereich zwischen den Eindrückungen und der Schneidkanten einen positiven Spanwinkel von mindestens 5° besitzt und die Übergänge von dem negativen Spanflächengrund zu den Trapezflanken und/oder von den Trapezflanken zu den die Eindrückungen umgebenden Spanflächenbereichen abgerundet sind, vorzugsweise mit einem Radius von 0,3 mm bis 3 mm. Solche Eindrückungen werden in der WO/11998 beschrieben, auf die ausdrücklich Bezug genommen wird.

Ausführungsbeispiele der Erfindung sind in den Zeichnungen dargestellt. Es zeigen:
- Fig. 1a: eine Draufsicht auf den betreffenden Teil eines Schneideinsatzes und
- Fig. 1b: einen Schnitt entlang der Linie I-I,
- Fig. 1c: eine Seitenteilansicht eines Schneideinsatzes,
- Fig. 1d: eine Draufsicht auf die Teilansicht nach Fig. 1c und
- Fig. 1e: eine Schnittansicht entlang der Linie II-II nach Fig. 1d,
- Fig. 2a: eine Seitenansicht eines Teils einer Wendeschneidplatte mit einer alternativen Ausführungsform des erfindungsgemäßen Spanformelementes,
- Fig. 2b: eine Draufsicht auf die Teilansicht nach Fig. 2a und
- Fig. 2c: eine Schnittansicht entlang der Linie III-III in Fig. 2b,
- Fig. 3a: die Draufsicht auf einen Teil eines Schneideinsatzes während des Zerspanens,
- Fig. 3b: eine Schnittansicht entlang der Linie IV-IV nach Fig. 3a,
- Fig. 3c: eine Schnittansicht auf eine Wendeschneidplatte ohne die erfindungsgemäßen Spanformelemente,
- Fig. 3d: eine Schnittansicht und Rückansicht entsprechend Fig. 1e oder 2c mit ablaufendem Span und
- Fig. 3e: eine entsprechende Schnittansicht und Rückansicht ohne erhabenes Spanformelement und
- Fig. 4a und 4b: jeweils Ansichten einer konkreten Wendeschneidplatte mit muldenförmigen Vertiefungen und erhabenen Spanform-elementen in einer Draufsicht und einer Teilansicht.

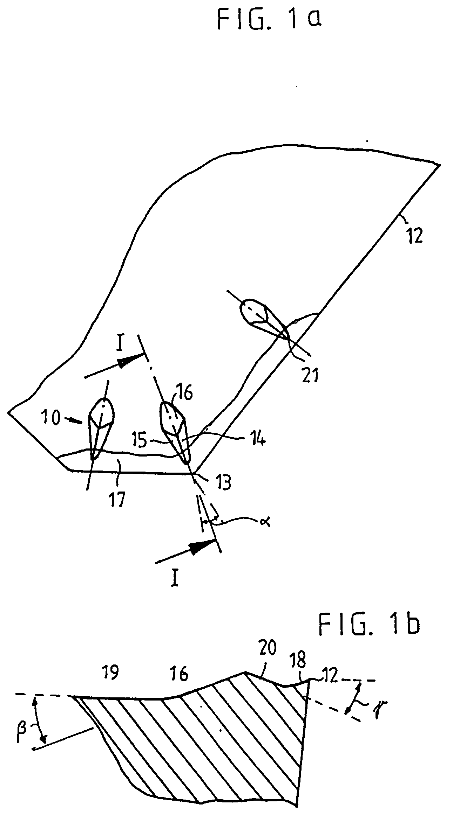

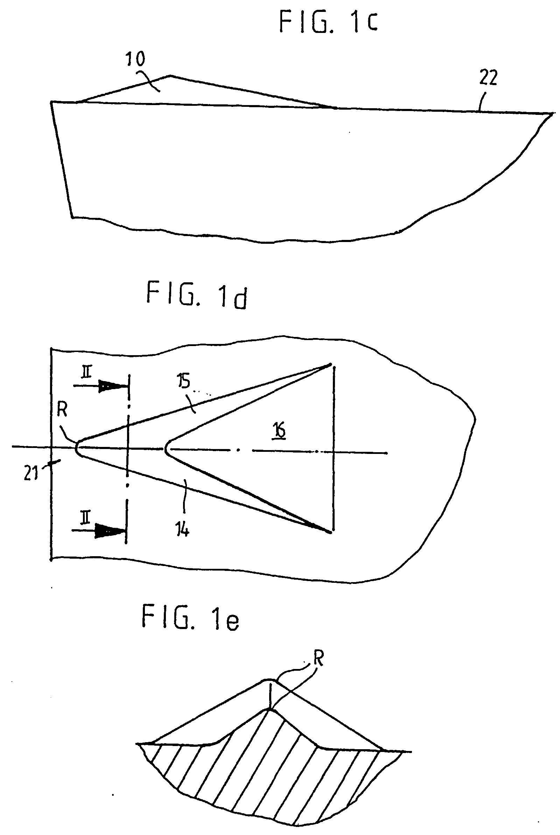

Das erhabene Spanformelement 10 weist mit seiner Längsachse 11 entweder senkrecht in Richtung der Schneidkante 12 oder in Richtung einer Schneidecke 13. Das Spanformelement 10 besitzt der Schneidkante 12 oder Schneidecke 13 zugewandte Seitenflächen 14 und 15 auf, die eben ausgebildet sind und einen Keilwinkel α von 20° bis 30° bilden. Im schneidkantenabgewandten Bereich ist eine abfallende Flanke 16 vorgesehen. Der Bereich des ablaufenden Spanes ist mit 17 bezeichnet. Wie aus Fig. 1b ersichtlich, grenzt an die Schneidkante ein abfallender Spanflächenbereich 18 an, der bis zu einem abgesenkten Mittelteil 19 reicht. In diesem abgesenkten Bereich befinden sich erhabene Spanformelemente, deren durch die aneinanderstoßenden Seitenflächen gebildete Kante 20 abgerundet ist. Die abfallende Flanke 16 besitzt einen Neigungswinkel β zwischen 15° und 30°, der auch dem Neigungswinkel der abfallenden Flanke 18 entspricht. An ihrem unteren Fußpunkt 21 bzw. entlang der Kante 20 laufen die Seitenflächen 14 und 15 in einer Rundung zwischen 0,1 mm bis 0,5 mm aus.

Wie Fig. 1c zeigt, kann das Spanformelement 10 auf einer ebenen Spanfläche 22 angeordnet sein. Im Querschnitt nach Fig. 1e ist das Spanformelement im wesentlichen im Bereich der Anstiegsflanke dreieckig, allerdings mit gleichmäßig zunehmender Breite.

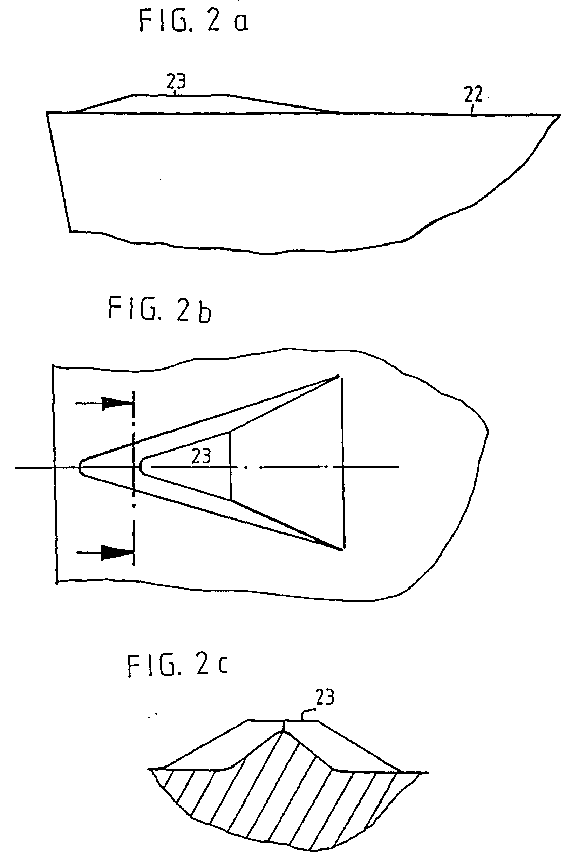

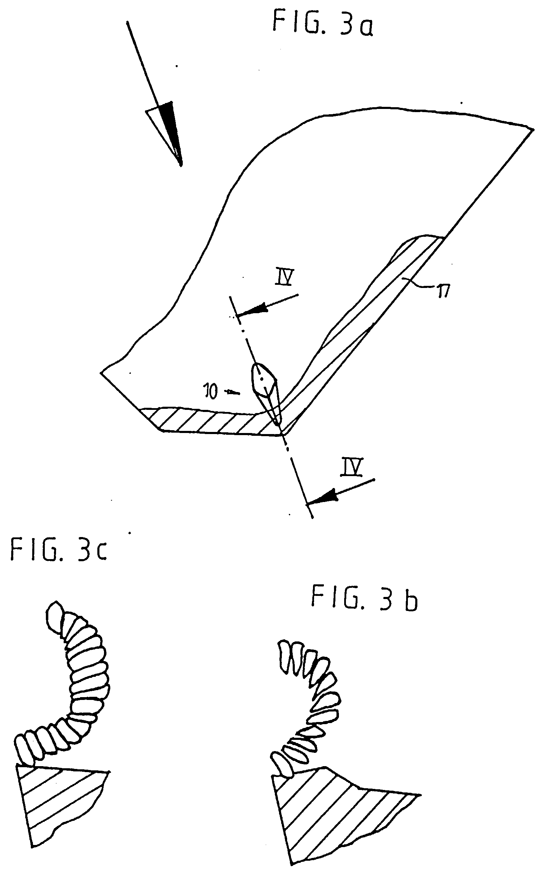

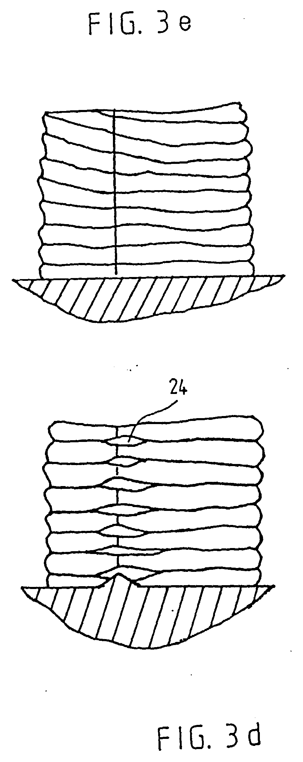

Die Ausführungsform nach Fig. 2 unterscheidet sich von derjenigen nach Fig. 1 durch eine obere Dachfläche 23, die parallel zur Spanfläche 22 oder einem abgesenkten Spanflächenmittelteil oder einem erhabenen Spanflächenmittelteil angeordnet ist. Anhand der Fig. 3a ist die Wirkung des Spanformelementes 10 bei ablaufendem Span 17 zu erkennen. Während - wie aus Fig. 3c und 3e ersichtlich - der ablaufende lamellenartige Span von Lamelle zu Lamelle fest verschweißt ist, besitzt der ablaufende Span nach Fig. 3a,b und d partielle Durchbrechungen 24, d.h. er ist geschwächt bzw. von Lamelle zu Lamelle teilweise gelöst, so daß er insgesamt mit geringer Kraftauswirkung entlang der Spanfläche ablaufen kann.

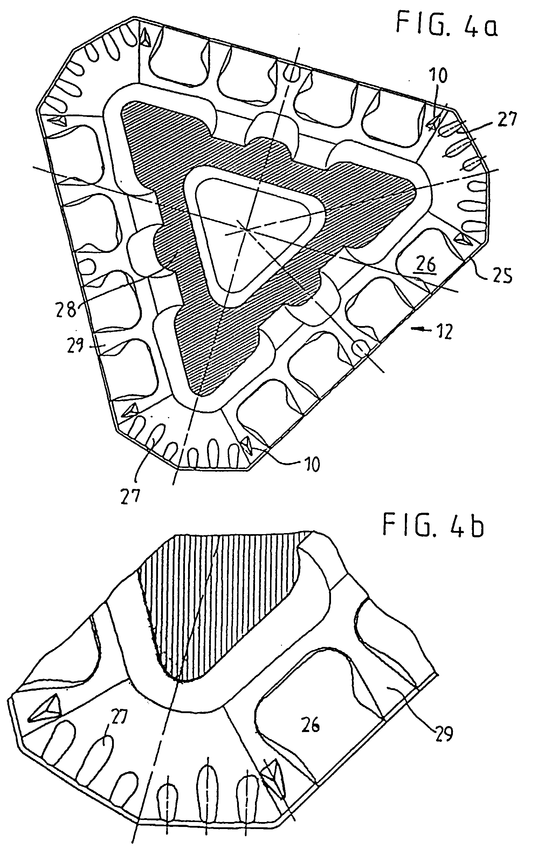

Konkrete Anwendungen des Spanformelementes 10 auf einer Wendeschneidplatte sind Fig. 4a und 4b zu entnehmen. Dieser Schneideinsatz besitzt eine umlaufende Fase 25, die von Eindrückungen 26, die auch die Schneidkante 12 durchbrechen, durchbrochen ist. Pro Schneidkante sind vier dieser Durchbrechungen dargestellt, die im einzelnen in der WO 93/11898 beschrieben werden. Im Bereich der abgewinkelten Schneidecke 26 sind noch weitere muldenförmige Vertiefungen 27 unterschiedlicher Länge vorgesehen, die entweder bis an die Fase 25 heranreichen oder diese teilweise durchbrechen. Diese länglich-ovalen Spanformmulden 27 werden seitlich durch Spanformelemente 10 flankiert, woran sich zur nächsten Schneidecke jeweils vier muldenförmige Ausnehmungen 26 anschließen. Alle genannten Spanformelemente sind in einer Spanformnut 29 angeordnet, die zwischen der Fase 25 und einem erhabenen Plateau 28 liegt. Dieses Plateau 28 hat eine Kontur, die im wesentlichen dreieckförmig ist.

Verbesserte Schneideigenschaften konnten auch bei runden Schneideinsätzen erzielt werden, die mit den erfindungsgemäßen Spanformelementen ausgestattet waren.

## Patentansprüche

1. Schneideinsatz zur spanbildenden Bearbeitung, dessen mindestens einseitige Deckfläche die Spanfläche und dessen umlaufende Seitenflächen die Freiflächen bilden, wobei die Spanfläche mindestens ein erhabenes Spanformelement (10) aufweist, das in Richtung der Schneidkante (12) aus einer Draufsicht betrachtet keilförmig ausläuft und das in Richtung seiner Längsachse (11) im Bereich der der Schneidkante (12) zugewandten Anstiegsfläche (14,15) kontinuierlich zu schneidkantenferneren Bereichen eine zunehmende Breite aufweist, wobei die Anstiegsfläche aus im wesentlichen ebenen Seitenflächen (14,15) besteht, die sowohl zur Schneidkante (12) hin als auch nach oben unter einem spitzen Winkel aufeinander zulaufen, und wobei die der Schneidkante (12) abgewandte Fläche (16) an die Anstiegsfläche (14,15) zumindest teilweise angrenzt und als abfallende Flanke ausgebildet ist,
**dadurch gekennzeichnet,**
daß die obere Kante (20), die durch die aneinanderstoßenden Seitenflächen (14,15) gebildet wird, durchgängig abgerundet ist und daß die abfallende Flanke eine Ebene (16) ist, die einen negativen Neigungswinkel (β) relativ zu der Ebene, in der die Schneidecken liegen oder relativ zur Schneidekante zwischen 15° und 40° aufweist.

2. Schneideinsatz nach Anspruch 1, dadurch gekennzeichnet, daß der an der oberen Kante (20) in Längsrichtung gemessene Anstiegswinkel (γ) relativ zu der Ebene, in der die Schneid-ecken liegen oder zur Schneidkante zwischen 10° und 45°, vorzugsweise zwischen 20° und 35° liegt.

3. Schneideinsatz nach Anspruch 1 oder 2, dadurch gekennzeichnet, daß die abfallende Flanke eine Ebene (16) ist, die einen negativen Neigungswinkel (β) relativ zu der Ebene, in der die Schneidecken liegen oder relativ zur Schneidkante zwischen 15° bis 30° aufweist.

4. Schneideinsatz nach einem der Ansprüche 1 bis 3, dadurch gekennzeichnet, daß die Seitenflächen (14,15) in einer Draufsicht betrachtet einen Keilwinkel (α) zwischen 15° und 40°, vorzugsweise 20° bis 30° bilden.

5. Schneideinsatz nach einem der Ansprüche 1 bis 4, dadurch gekennzeichnet, daß der Radius der abgerundeten oberen Kante (20) zwischen 0,1 mm bis 0,5 mm liegt.

6. Schneideinsatz nach einem der Ansprüche 1 bis 5, dadurch gekennzeichnet, daß die Länge der Anstiegsflanke, in Draufsicht gemessen, an der oberen Kante zwischen 0,3 mm und 4 mm liegt.

7. Schneideinsatz nach einem der Ansprüche 1 bis 6, dadurch gekennzeichnet, daß das oder die Spanformelemente (10) in einem Abstand zwischen 0,05 mm bis 1 mm, vorzugsweise 0,08 mm bis 0,3 mm von der Schneidkante (12) angeordnet sind.

8. Schneideinsatz nach einem der Ansprüche 1 bis 7, dadurch gekennzeichnet, daß die Spanformelemente (10) mit ihrer Längsachse (11) im wesentlichen senkrecht zur nächstliegenden Schneidkante (12) oder in die Schneidecke (13) weisend angeordnet sind.

9. Schneideinsatz nach einem der Ansprüche 1 bis 8, dadurch gekennzeichnet, daß das oder die Spanformelemente (10) eine obere Ebene und parallel zur Schneidkantenebene liegende Dachfläche (23) aufweisen, die vorzugsweise durch Abschleifen erzeugt worden ist.

10. Schneideinsatz nach einem der Ansprüche 1 bis 9, dadurch gekennzeichnet, daß der an der Schneidkante (12) angrenzende Spanflächenbereich als abfallende Flanke (18), vorzugsweise unter demselben Winkel (β) wie die abfallende Flanke (16) des Spanformelementes (10) ausgebildet ist.

11. Schneideinsatz nach Anspruch 10, dadurch gekennzeichnet, daß zwischen dem abfallenden Spanflächenbereich (18) und der Schneidkante (12) eine Fase (25) vorgesehen ist, die sich vorzugsweise entlang der gesamten Schneidkante (12) mit gleichbleibender Breite erstreckt.

12. Schneideinsatz nach Anspruch 11, gekennzeichnet durch eine Fase (25) und einen positiven Winkel oder einen Winkel von 0°.

13. Schneideinsatz nach einem der Ansprüche 1 bis 12, dadurch gekennzeichnet, daß das Spanflächenmittelteil als ebenes, abgesenktes oder erhabenes Plateau ausgebildet ist und daß bei erhabenem Plateau die Spanformelemente in einer Spanformnut (27) angeordnet sind.

14. Schneideinsatz nach einem der Ansprüche 1 bis 13, dadurch gekennzeichnet, daß entlang der Schneidkante (12) mindestens ein weiteres muldenförmiges Spanformelement (26,27) vorgesehen ist.

15. Schneideinsatz nach Anspruch 14, dadurch gekennzeichnet, daß entlang der Schneidkante (12) Eindrückungen (26) vorgesehen sind, die die Schneidkante (12) und/oder die Fase (25) durchbrechen und die einen unter einem negativen Spanwinkel oder 0°-Spanwinkel zur Schneidkante (12) hin auslaufenden Spanflächengrund aufweisen, wobei die Spanfläche im Bereich zwischen den Eindrückungen (26) und der Schneidkante (12) einen positiven Spanwinkel von mindestens 5° besitzt und die Übergänge von dem negativen Spanflächengrund zu den Trapezflanken und/oder von den Trapezflanken zu den die Eindrückungen umgebenden Spanflächenbereichen abgerundet sind, vorzugsweise mit einem Radius von 0,3 mm bis 3 mm.

## Claims

1. Cutting insert for chip-removing machining having at least one top surface forming the rake face and peripheral side faces forming clearance faces, the rake face having at least one raised chip-shaping element (10) that extends as seen from above like a wedge toward the cutting edge (12) and that has a width that increases uniformly away from the cutting edge along its longitudinal axis (11) continuously in the region of ascending surface (14, 15) turned toward the cutting edge (12), the ascending surface being formed as generally planar side flanks (14, 15) which extend at an acute angle to each other, toward the cutting edge (12) as well as upward, and whereby the surface (16) turned away from the cutting edge (12), ending at least partially at the ascending surfaces (14, 15) and being formed as a descending flank,
**characterised in that**
the upper edge (20) formed by the adjoining each other side surfaces (14, 15) is rounded along its full length and that the descending flank is a plane having a negative angle (β) of inclination relative to the plane in which the cutting corners lie or an angle of inclination of 15° to 40° relative to the cutting edge.

2. Cutting insert according to claim 1, characterised in that the angle of ascent (γ) of the upper edge (20) measured in longitudinal direction relative to the plane in which the cutting corners lie or relative to the cutting edge is between 10° and 45°, preferably 20° to 35°.

3. The cutting insert according to claim 1 or 2, charcterised in that the descending flank is a plane (16) which has a negative angle (β) of inclination relative to the plane in which the cutting corners lie or an angle of inclination of 15° to 30° relative to the cutting edge.

4. Cutting insert according to one of claims 1 to 3, characterised in that the side flanks (14, 15) seen from above form a wedge angel (α) between 15° and 40°, preferably 20° to 30°.

5. Cutting insert according to one of claims 1 to 4, characterised in that the radius of the rounded upper edge (20) is between 0,1 mm and 0,5 mm.

6. Cutting insert according to one of claims 1 to 5, characterised in that the length of the ascending flank seen from above at the upper edge is between 0,3 mm and 4 mm.

7. Cutting insert according to one of claims 1 to 6, characterised in that the chip-shaping element(s) (10) are arranged at a spacing of between 0,05 mm and 1 mm, preferably 0,08 mm to 3 mm from the cutting edge (12).

8. Cutting insert according to one of claims 1 to 7, characterised in that the chip-shaping elements (10) are arranged with their longitudinal axes (11) generally perpendicular to the adjacent cutting edge (12) or directed into the cutting corners (13).

9. Cutting insert according to one of claims 1 to 8, characterised in that the chip-shaping element(s) (10) have an upper surface parallel to the cutting-edge plane preferably produced by grinding.

10. Cutting insert according to one of claims 1 to 9, characterised in that the rake face region immediately adjacent the cutting edge (12) is formed as a descending flank (18), preferably forming the same angle (β) as the descending flank (16) of the chip-shaping element (10).

11. Cutting insert according to claim 10, characterised in that between the descending rake face region (18) and the cutting edge (12) there is a land (25) that extends preferably along the entire cutting edge (12) and has a constant width.

12. Cutting insert according to claim 11, characterised by a land (25) and a positive angle or an angle of 0°.

13. Cutting insert according to one of claims 1 to 12, characterised in that the rake face central region is formed as a planar, recessed, or raised plateau and that with a raised plateau the chip shaping elements are arranged in a chip-shaping groove (27).

14. Cutting insert according to one of claims 1 to 13, characterised in that along the cutting edge (12) there is at least one further through-shaped chip-shaping element (26, 27).

15. Cutting insert according to claim 14, characterised in that along the cutting edge (12) there are recesses (26) which interrupt the cutting edge (12) and/or the land (25) and which cutting-surface floors extending at a negative rake angle or 0° rake angle to the cutting edge (12), the rake face in the region between the recesses (26) and the cutting edge (12) having a positive rake angle of at least 5° and the transitions from the negative rake face floor to the trapezoid flanks and/or from the trapezoid flanks to the rake face regions surrounding the recess are rounded, preferably with a radius from 0,3 mm to 3 mm.

## Revendications

1. Insert de coupe destiné à l'usinage par enlévement de copeaux, dont la surface supérieure au moins unilatérale forme la face de coupe et dont les surfaces latérales périphériques forment les faces de dépouille, la face de coupe présentant du moins un élément élevé (10) a former le copeau, qui, vu de dessus, se termine de manière cunéiforme dans la direction du tranchant (12) et qui, dans la direction de son axe longitudinal (11), dans la zone de la surface montante (14, 15) montrant vers le tranchant (12), présente une largeur augmentant continuellement vers des régions situées plus loin du tranchant, la surface montante se composant de surfaces latérales (14, 15) pour l'essentiel planes qui, aussi bien vers le tranchant (12) que vers le haut, s'étendent l'une vers l'autre à un angle aigu, et la surface (16) détournée du tranchant (12) étant au moins partiellement contiguë à la surface montante (14, 15) et étant formée en tant que flanc descendant,
**caractérisé par le fait**
que le bord supérieur (20) qui est formé par les surfaces latérales (14, 15) se touchant, est arrondi dans son ensemble et que le flanc descendant est un plan (16) qui présente un angle négatif d'inclinaison (β) par rapport au plan dans lequel sont situés les coins de coupe, ou par rapport au tranchant, qui est compris entre 15° et 40°.

2. Insert de coupe selon la revendication 1, caractérisé par le fait que l'angle de montée (γ) mesuré sur le bord supérieur (20) dans la direction longitudinale, par rapport au plan dans lequel sont situés les coins de coupe ou par rapport au tranchant, est compris entre 10° et 45°, de préférence entre 20° et 35°.

3. Insert de coupe selon la revendication 1 ou 2, caractérisé par le fait que le flanc descendant est un plan (16) qui présente un angle négatif d'inclinaison (β) par rapport au plan dans lequel sont situés les coins de coupe, ou par rapport au tranchant, qui est compris entre 15° et 30°.

4. Insert de coupe selon l'une des revendications 1 à 3, caractérisé par le fait que les surfaces latérales (14, 15), vues de dessus, forment un angle de coin (α) qui est compris entre 15° et 40°, de préférence entre 20° et 30°.

5. Insert de coupe selon l'une des revendications 1 à 4, caractérisé par le fait que le rayon du bord supérieur (16) arrondi est compris entre 0,1 mm et 0,5 mm.

6. Insert de coupe selon l'une des revendications 1 à 5, caractérisé par le fait que la longueur du flanc montant, mesurée dans une vue de dessus, sur le bord supérieur est comprise entre 0,3 mm et 4 mm.

7. Insert de coupe selon l'une des revendications 1 à 6, caractérisé par le fait que l'élément ou les éléments (10) à former le copeau sont disposés à une distance du trachant (12), qui est comprise entre 0,05 mm et 1 mm, de préférence entre 0,08 mm et 0,3 mm.

8. Insert de coupe selon l'une des revendications 1 à 7, caractérisé par le fait que les éléments (10) à former le copeau sont disposés, avec leur axe longitudinal (11), pour l'essentiel verticalement au trachant (12) situé le plus près ou de manière à montrer dans le coin de coupe (13).

9. Insert de coupe selon l'une des revendications 1 à 8, caractérisé par le fait que l'élément ou les éléments à former le copeau (10) présentent une surface supérieure (23) plane et située parallélement au plan du tranchant, qui, de préférence, était produite par meulage.

10. Insert de coupe selon l'une des revendications 1 à 9, caractérisé par le fait que la zone de la face de coupe, qui est adjacente au tranchant (12), est réalisée en tant que flanc descendant (18), de préférence au même angle (β) que le flanc descendant (16) de l'élément à former le copeau (10).

11. Insert de coupe selon la revendication 10, caractérisé par le fait que l'on prévoit entre la zone descendante (18) de la face de coupe et le tranchant (12) un chanfrein (25) qui, de préférence, s'étend le long de l'ensemble du trachant (12), et cela avec une largeur constante.

12. Insert de coupe selon la revendication 11, caractérisé par un chanfrein (25) et un angle positif ou un angle de 0°.

13. Insert de coupe selon l'une des revendications 1 à 12, caractérisé par le fait que la partie centrale de la face de coupe est formée en tant que plateau plan, abaissé ou élevé et que, dans le cas d'un plateau élevé, les éléments à former le copeau sont disposés dans une rainure à former le copeau (27).

14. Insert de coupe selon l'une des revendications 1 à 13, caractérisé par le fait que l'on prévoit le long du tranchant (12) du moins un autre élément à former le copeau (26, 27) en forme de creux.

15. Insert de coupe selon la revendication 14, caractérisé par le fait que l'on prévoit le long du tranchant (12) des enfoncements (26) qui interrompent le tranchant (12) et/ou le chanfrein (25) et qui présentent un fond de la face de coupe, qui se termine à un angle de coupe négatif ou un angle de coupe de 0° vers le tranchant (12), la face de coupe possédant dans la zone située entre les enfoncements (26) et le tranchant (12) un angle de coupe positif de 5° du moins, et les transitions du fond négatif de la face de coupe aux flancs trapézoïdaux et/ou des flancs trapézoïdaux aux zones de la face de coupe, qui entourent les enfoncements, étant arrondies, de préférence avec un rayon compris entre 0,3 mm et 3 mm.
